# EUROPEAN PATENT APPLICATION

(11) **EP 2 519 008 A1**
(43) Date of publication of application: **31.10.2012**
(21) Application number: 10838668.1
(22) Date of filing: 21.12.2010
(51) Int. Cl.: H04N 7/66

(54) **VIDEO MONITORING SYSTEM AND FORWARD ERROR CORRECTION (FEC) METHOD THEREOF**

(30) Priority: 25.12.2009 CN 200910247096
(71) Applicant: ZTE Corporation, Shenzhen, Guangdong 518057 (CN)
(72) Inventor: JIN, Ziming, Guangdong 518057 (CN)
(74) Representative: Sander Jakobsson, Sofia Ellinor
(86) International application number: PCT/CN2010/080059
(87) International publication number: WO 2011/076105

(57) **Abstract**

The present invention discloses a video surveillence system and a Forward Error Correction (FEC) method thereof. The method includes: the surveillence front end initiating a session request to the surveillence platform and establishing a session; the surveillence front end performing FEC encoding on a source media code stream, and transferring an FEC code stream obtained through the encoding and the source media code stream to the surveillence platform in a same channel; the surveillence platform splitting received code streams into the source media code stream and the FEC code stream, and if it is determined that a media packet is lost in the source media code stream, recovering the lost media packet in the source media code stream through the FEC code stream. By using the present invention, the problem of network packet loss between the surveillence front end and surveillence platform frequently resulted from the limited uplink bandwidth is solved, and use-cost is reduced.

## Description

### Technical Field

The present invention relates to the field of video surveillence, and specifically, to a video surveillence system and forward error correction method thereof.

### Background of the Related Art

A video surveillence service based on the IP network is an emerging multimedia value added service. The service system mainly consists of three parts of surveillence front end, surveillence platform and surveillence client end. The surveillence front end mainly completes acquisition, encoding and uploading of video and audio signal, completes acquisition and processing of alarm signal, and completes control of auxiliary equipments such as camera and cradle head and so on. The surveillence platform mainly completes media distribution, equipment management, service management and operation support and so on. The surveillence client end mainly presents a specific video surveillence service to clients. The problem of network packet loss occurs frequently between the surveillence front end and the surveillence platform for the uplink bandwidth is limited, thereby causing the picture quality to reduce and harming the user experience. Currently, an Automatic Repeat-request (ARQ) method can be used to solve this problem in the application layer. The method requires a receiving end to feed back the network status in real time and a sending end to retransmit media data according to the received feedback information. In such application of the video surveillence, the ARQ has a higher requirement on the surveillence front end, so it is not suitable. In the existing Forward Error Correction (FEC) method, the sending end sends a media code stream and error correction code stream simultaneously, and the receiving end performs judgment according to the received media code stream and error correction code and performs corresponding error correction. However, in the related art, the problem of network packet loss between the surveillence front end and surveillence platform frequently resulted from the limited uplink bandwidth is not solved through the FEC method in the application layer.

### Summary of the Invention

The present invention provides a video surveillence system and a forward error correction method thereof, which solves the problem of network packet loss between the surveillence front end and surveillence platform resulted from the frequently limited uplink bandwidth.

In order to solve the above problem, the present invention provides a forward error correction method in a video surveillence system, the video surveillence system comprises a surveillence front end and a surveillence platform, and the method comprises:
the surveillence front end initiating a session request to the surveillence platform and establishing a session;
the surveillence front end performing FEC (Forward Error Correction) encoding on a source media code stream, and transferring an FEC code stream obtained through the encoding and the source media code stream to the surveillence platform in a same channel;
the surveillence platform splitting received code streams into the source media code stream and the FEC code stream, and if it is determined that a media packet is lost in the source media code stream, recovering the lost media packet in the source media code stream through the FEC code stream obtained through the splitting.

The above method can further comprise: when the surveillence front end initiates the session request to the surveillence platform, carrying a field supporting FEC in a Session Description Protocol (SDP) message, and sending the SDP message to the surveillence platform; the surveillence platform acquiring the field supporting FEC from the SDP message, performing initialization on the acquired field and reserving resources related to the acquired field. The SDP message can be m=<media> <port> <transport> <fmt list>, wherein <fmt list> is the field supporting FEC, key fields of <fmt list> include: load type, source code stream identity, FEC encoding identity, FEC encoding redundancy rate, a number of source packets of FEC encoding and FEC repair window size; and the surveillence platform splits the received code streams into the source media code stream and the FEC code stream according to the load type.

The step of the surveillence front end performing FEC encoding on a source media code stream can comprise: the surveillence front end adding an FEC header before FEC encoding data, and subsequently, taking the FEC header and FEC encoding data as load contents of a Real-time Transport Protocol (RTP) packet to be packaged directly; wherein, when RTP encapsulation is performed on the FEC encoding data, the load type different from the source media code stream is adopted to perform definition.

The surveillence platform can recover the lost media packet in the source media code stream in the following way: recovering the lost media packet in the source media code stream through the FEC code stream and an FEC decoding operation.

The above method can further comprise: when surveillence is stopped, the surveillence platform sending a stop play request to the surveillence front end, and the surveillence front end replying a stop play response and stopping sending the media code stream and the FEC code stream; the surveillence platform releasing the reserved resources after receiving the stop play response. The present invention further provides a video surveillence system, which comprises: a surveillence front end and a surveillence platform, wherein,
the surveillence front end is configured to: initiate a session request to the surveillence platform and establish a session; perform FEC encoding on a source media code stream, and transfer an FEC code stream obtained through the encoding and the source media code stream to the surveillence platform in a same channel;
the surveillence platform is configured to: split the code streams transferred by the surveillence front end into the source media code stream and the FEC code stream, and if it is determined that a media packet is lost, recover the lost media packet in the source media code stream through the FEC code stream.

The surveillence front end can be further configured to: when initiating the session request to the surveillence platform, carry a field supporting Forward Error Correction (FEC) in a Session Description Protocol (SDP) message, and send the SDP message to the surveillence platform; the surveillence platform can be further configured to: acquire the field supporting FEC from the SDP message, perform initialization on the acquired field and reserve resources related to the acquired field. The SDP message can be m=<media> <port> <transport> <fmt list>, wherein <fmt list> is the field supporting FEC, key fields of <fmt list> include:: load type, source code stream identity, FEC encoding identity, FEC encoding redundancy rate, a number of source packets of FEC encoding and FEC repair window size; and the surveillence platform is configured to split the received code streams into the source media code stream and FEC code stream according to the load type.

The surveillence front end can be further configured to: when performing FEC encoding on the media code stream, add an FEC header before FEC encoding data, and subsequently, take the FEC header and the FEC encoding data as load contents of an RTP packet to be packaged directly; and when performing RTP encapsulation on the FEC encoding data, adopt the load type different from the source media code stream to define the FEC encoding data.

The surveillence platform can recover the lost media packet in the source media code stream in the following way: recovering the lost media packet in the source media code stream through the FEC code stream and an FEC decoding operation.

The surveillence platform can be further configured to: when surveillence is stopped, send a stop play request to the surveillence front end, and release the reserved resources after receiving a stop play response sent by the surveillence front end; the surveillence front end is further configured to: reply the stop play response to the surveillence platform, and stop sending the media code stream and FEC code stream.

Compared with the related art, by using the present invention, the problem of network packet loss between the surveillence front end and surveillence platform frequently resulted from the limited uplink bandwidth is solved, and use-cost is reduced.

### Brief Description of Drawings

FIG. 1 is a flow diagram of the forward error correction method in the video surveillence system according to the present invention.
FIG. 2 is a flow diagram of signaling interaction flow for supporting FEC in the present invention.
FIG. 3 is a flow diagram of packaging and sending flow for the media packet and FEC packet in the present invention.
FIG. 4 is a schematic diagram of principle of the video surveillence system according to the present invention.
FIG. 5 is a schematic diagram of structure of the video surveillence system according to the present invention.

### Preferred Embodiments of the Present Invention

The present invention will be further described in combination with the accompanying drawings and specific embodiments below.

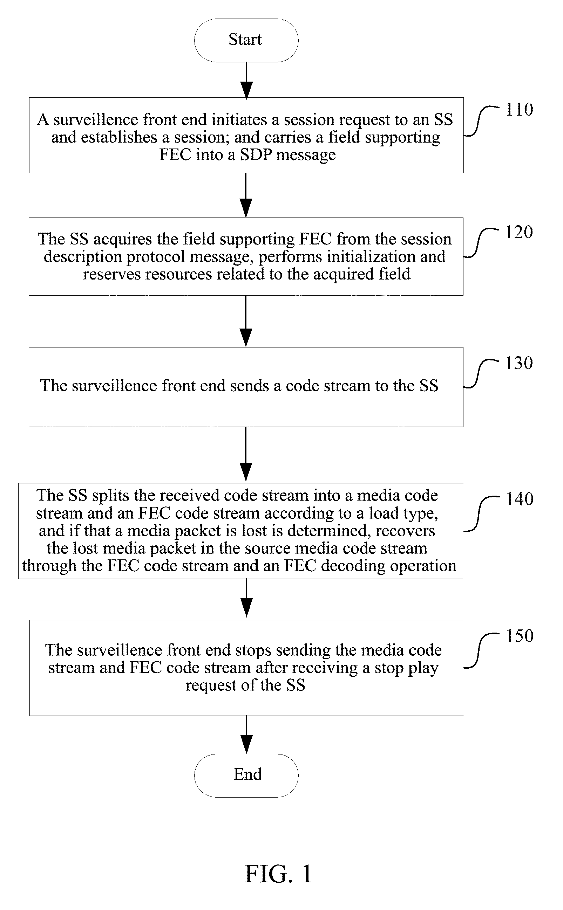

As shown in FIG. 1, the forward error correction method in the video surveillence system according to the present invention includes following steps.

In step 110, a surveillence front end initiates a session request to a surveillence platform (which can be a Stream Server (SS)) and establishes a session; and a field supporting FEC is carried in a Session Description Protocol (SDP) message.

In the present invention, the SDP message is expanded to support the FEC, and a specific definition is as follows:
m=<media> <port> <transport> <fmt list>.

Wherein, definitions of <media> <port> <transport> are identical with that of RFC2327 protocol, a definition related to the FEC is added into <fmt list>, and key fields of <fmt list> are defined as follows:
load type, source code stream identity, FEC encoding identity, FEC encoding redundancy rate, a number of source packets of FEC encoding and FEC repair window size and so on.

For example:
the load type of FEC is defined as: 127;
fec-apt="apt=" pt-id is a corresponding relation between a source code stream and an FEC compensation stream, and pt-id indicates the source code stream identity, wherein pt-id=1*DIGIT;
fec-encoding-id = "encoding-id=" enc-id is the FEC encoding identity, wherein enc-id = 1*DIGIT;
fec- redundancy-rate = " redundancy-rate =" rate is the FEC encoding redundancy rate, the value is a percentage, wherein rate = 1*DIGIT;
fec- group-count = " group-count =" gc is the number of source packets of FEC encoding, wherein gc = 1*DIGIT; and
fec- repair-window = " repair-window =" rw is an FEC repair window, and the unit is millisecond, wherein rw = 1*DIGIT.

In step 120, the SS acquires the field supporting FEC from the received session description protocol message, performs initialization on the acquired field and reserves resources related to the acquired field.

In step 130, the surveillence front end starts to send a code stream to the SS.

Wherein, the surveillence front end firstly performs FEC encoding on a media code stream, and transfers a coded FEC code stream and a source media code stream to the SS respectively in a same channel.

In the existing standards, there is no complete definition about FEC packaging. In the present invention, a Real-time Transport Protocol (RTP) is expanded to support the FEC, wherein,
firstly an FEC header is added before FEC encoding data, and then the FEC header and FEC encoding data are taken together as load contents of an RTP packet to be packaged directly; no expansion is performed on a RTP header itself; when RTP encapsulation is performed on the FEC encoding data, the load type different from the source media code stream is adopted to define (the value of the load type is 127), a receiving end determines whether the received code stream is the source media code stream or FEC code stream according to the load type.

FEC expanded definition

Packaging formats of FEC RTP packet are defined as follows:

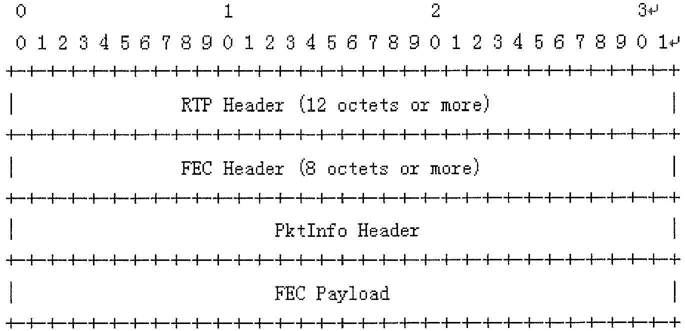

Wherein, meaning of each field in the RTP header of the FEC packet follows the RFC3550 standard; and a header of the FEC packet is defined as follows:

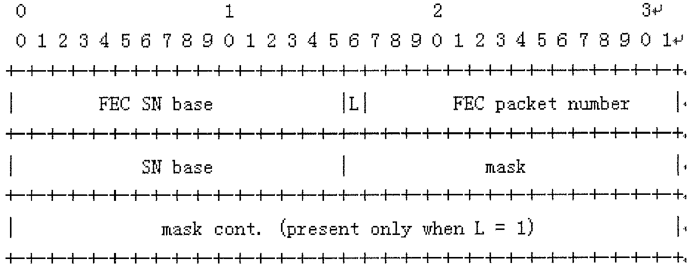

FEC SN base: 16 bits, a serial number of the first RTP packet corresponding to FEC verification data generated by a group of media packets.

L: 1 bit, it is defined as 1, and the length of a back template is 48 bits.

FEC packet number: 15 bits, indicating that FEC redundant data of the current group are transferred in how many RTP packets respectively, that is, the number of RTP packets of FEC data of the current group.

SN base: 16 bits, indicating the first RTP serial number of media packet sequence protected by the FEC packet.

Mask: 48 bits, the template mask is used to indicate which packets in the original media packets participates in calculation of the current FEC packet, if the *i*th (*i*=0,1,2...) bit of mask is set as 1, the RTP serial number is that the N+I media packet in association with the current FEC packet, wherein N is a value of the SN base field.

In step 140, the SS splits the received code stream into the media code stream and FEC code stream according to the load type, and if that a media packet is lost is determined, recovers the lost media packet in the source media code stream through the FEC code stream and an FEC decoding operation.

In step 150, the surveillence front end stops sending the media code stream and FEC code stream after receiving a stop play request of the SS.

The present invention will be further described through an example of the session control between the surveillence front end and SS using a Real Time Streaming Protocol (RTSP), which is divided into a signaling interaction flow for supporting FEC and a packaging and sending flow for the media packet and FEC packet.

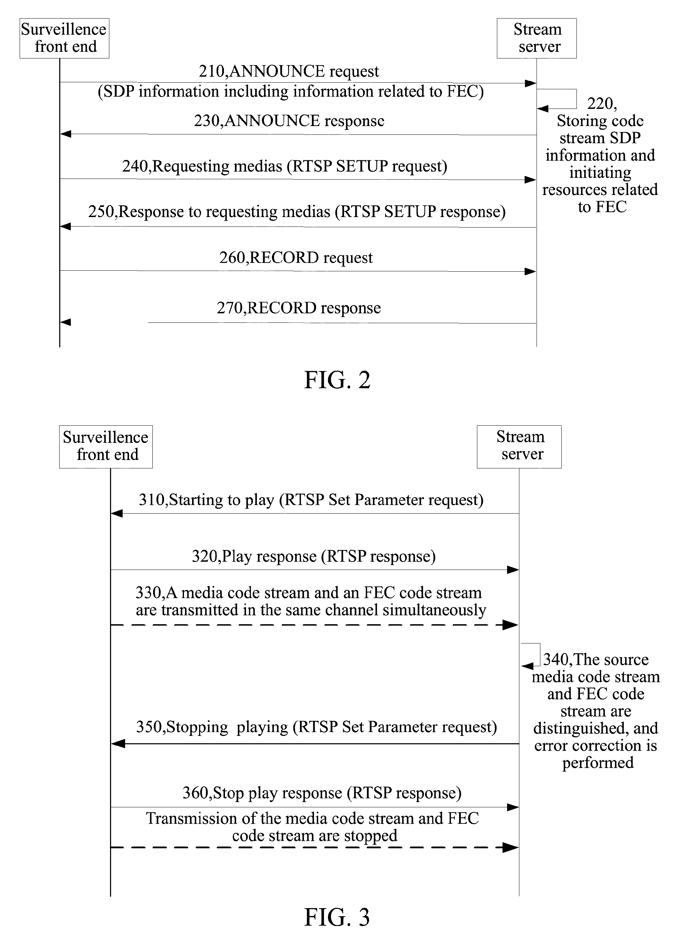

As shown in FIG. 2, the signaling interaction flow for supporting FEC includes following steps.

In step 210, a surveillence front end initiatively establishes a TCP connection with a stream server after getting on line successfully, and then sends an ANNOUNCE request of the RTSP to the stream server, and the request carries a SDP description.

In step 220, the stream server parses the received SDP description, if that the SDP description supports the FEC is determined, performs initialization and reserves resources, and then sends an ANNOUNCE response to the surveillence front end.

In step 230, the surveillence front end sends a SETUP request (RTSP message) to the stream server.

In step 240, the stream server replies a SETUP response (RTSP message) to the surveillence front end, and carries a number of a port for the stream server to receive media in the response message.

The stream server will receive a source media code stream and an FEC code stream at the port simultaneously.

In step 250, the surveillence front end sends a RECORD request (RTSP message) to the stream server.

In step 260, the stream server sends a RECORD response (RTSP message) to the surveillence front end, and a session between the surveillence front end and stream server is established successfully.

As shown in FIG. 3, the packaging and sending flow for the media packet and FEC packet includes following steps.

In step 310, a stream server sends a start play request (RTSP Set Parameter message) to a surveillence front end.

In step 320, the surveillence front end replies a start play response (RTSP response) to the stream server.

In step 330, the surveillence front end sends a source media code stream and an FEC code stream to the stream server simultaneously.

Wherein, the source media code stream and FEC code stream are sent in the same channel.

In step 340, the stream server receives the code streams in the same channel, and determines whether it is the source media code stream or FEC code stream according to the load type, if it is determined that network packet loss occurs according to the received source media code stream, uses the received FEC code stream to perform error correction and recovery.

In step 350, when surveillence is stopped, the stream server sends a stop play request (RTSP Set Parameter request) to the surveillence front end; the surveillence front end replies a stop play response and stops sending the media code stream and FEC code stream; and the stream server releases the reserved resources after receiving the response.

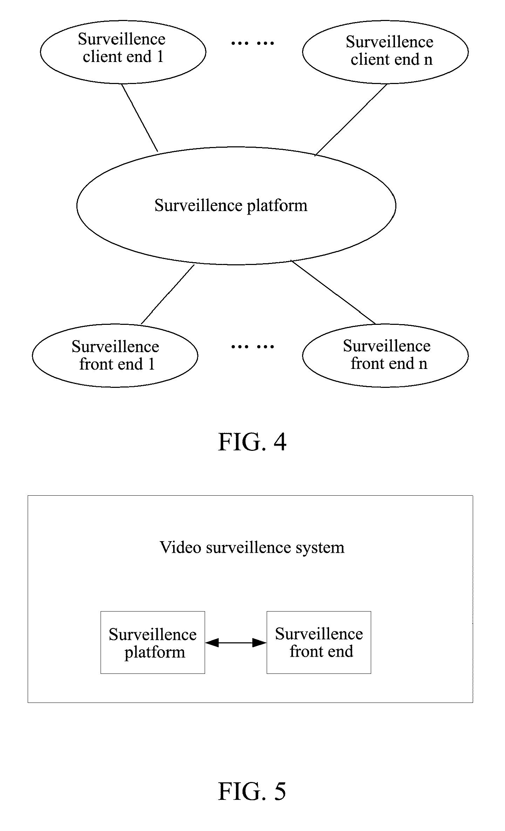

As shown in FIG. 4 and FIG. 5, the video surveillence system of the present invention includes: a surveillence front end and a surveillence platform, wherein,
the surveillence front end is configured to: initiate a session request to the surveillence platform and establish a session, and carry a field supporting Forward Error Correction (FEC) in a Session Description Protocol (SDP) message simultaneously; and perform FEC encoding on a media code stream, and transfer a coded FEC code stream and an source media code stream to the surveillence platform in the same channel;
the surveillence platform is configured to: acquire the field supporting FEC from the SDP message, perform initialization on the acquired field and reserve resources; split the code streams sent by the surveillence front end into the source media code stream and FEC code stream, and if that a media packet is lost is determined, recover the lost media packet in the source media code stream through the FEC code stream.

The SDP message defined by the surveillence front end is as follows: m=<media> <port> <transport> <fmt list>, wherein key fields of <fmt list> include: load type, source code stream identity, FEC encoding identity, FEC encoding redundancy rate, a number of source packets of FEC encoding and FEC repair window size.

The surveillence platform splits the received code streams into the media code stream and FEC code stream according to the load type.

The surveillence front end adds an FEC header before FEC encoding data when performing FEC encoding on the media code stream, and subsequently, takes the added FEC header and FEC encoding data together as load contents of an RTP packet to be packaged directly, wherein a RTP header self is not expanded; the surveillence front end adopts the load type different from the source media code stream to define the FEC encoding data when performing RTP encapsulation on the FEC encoding data.

The surveillence platform recovers the lost media packet in the source media code stream in the following way:
the surveillence platform recovering the lost media packet in the source media code stream through the FEC code stream and an FEC decoding operation.

The surveillence platform is further configured to: when surveillence is stopped, send a stop play request to the surveillence front end, and release the reserved resources after receiving a stop play response sent by the surveillence front end;
the surveillence front end is further configured to: reply the stop play response to the surveillence platform and stop sending the media code stream and FEC code stream.

The above description is only the specific embodiments of the present invention, but the protection scope of the present invention is not limited to the above description. Any changes and substitutions, which can be thought by a person skilled in the art and be within the technical scope disclosed by the present invention, should be all covered within the protection scope of the present invention. Therefore, the protection scope of the present invention should be subject to the protection scope of the claims.

### Industrial Applicability

Compared with the related art, with the present invention, the problem of network packet loss between the surveillence front end and surveillence platform frequently resulted from the limited uplink bandwidth can be solved, and use-cost can be reduced.

## Claims

1. A forward error correction method in a video surveillence system, the video surveillence system comprising a surveillence front end and a surveillence platform, and the method comprising:
the surveillence front end initiating a session request to the surveillence platform and establishing a session;
the surveillence front end performing FEC (Forward Error Correction) encoding on a source media code stream, and transferring an FEC code stream obtained through the encoding and the source media code stream to the surveillence platform in a same channel;
the surveillence platform splitting received code streams into the source media code stream and the FEC code stream, and if it is determined that a media packet is lost in the source media code stream, recovering the lost media packet in the source media code stream through the FEC code stream obtained through the splitting.

2. The method according to claim 1, further comprising:
when the surveillence front end initiates the session request to the surveillence platform, carrying a field supporting FEC in a Session Description Protocol (SDP) message, and sending the SDP message to the surveillence platform;
the surveillence platform acquiring the field supporting FEC from the SDP message, performing initialization on the acquired field and reserving resources related to the acquired field.

3. The method according to claim 2, wherein,
the SDP message is: m=<media> <port> <transport> <fmt list>, wherein <fmt list> is the field supporting FEC, key fields of <fmt list> include: load type, source code stream identity, FEC encoding identity, FEC encoding redundancy rate, a number of source packets of FEC encoding and FEC repair window size;
in the step of the surveillence platform splitting the received code streams into the source media code stream and the FEC code stream, the surveillence platform splits the received code streams into the source media code stream and the FEC code stream according to the load type.

4. The method according to claim 1, wherein, the step of the surveillence front end performing FEC encoding on the source media code stream comprises:
the surveillence front end adding an FEC header before FEC encoding data, and subsequently, taking the FEC header and FEC encoding data as load contents of a Real-time Transport Protocol (RTP) packet to be packaged directly; wherein, when RTP encapsulation is performed on the FEC encoding data, the load type different from the source media code stream is adopted to perform definition.

5. The method according to claim 1, wherein, the step of recovering the lost media packet in the source media code stream through the FEC code stream obtained through the splitting comprises:
the surveillence platform recovering the lost media packet in the source media code stream through the FEC code stream and an FEC decoding operation.

6. The method according to claim 2, further comprising:
when surveillence is stopped, the surveillence platform sending a stop play request to the surveillence front end, and the surveillence front end replying a stop play response and stopping sending the media code stream and the FEC code stream; the surveillence platform releasing the reserved resources after receiving the stop play response.

7. A video surveillence system, comprising: a surveillence front end and a surveillence platform, wherein,
the surveillence front end is configured to: initiate a session request to the surveillence platform and establish a session; perform FEC (Forward Error Correction) encoding on a source media code stream, and transfer an FEC code stream obtained through the encoding and the source media code stream to the surveillence platform in a same channel;
the surveillence platform is configured to: split the code streams transferred by the surveillence front end into the source media code stream and the FEC code stream, and if it is determined that a media packet in the source media code stream obtained through the encoding is lost, recover the lost media packet in the source media code stream through the FEC code stream obtained through the encoding.

8. The video surveillence system according to claim 7, wherein,
the surveillence front end is further configured to: when initiating the session request to the surveillence platform, carry a field supporting FEC in a Session Description Protocol (SDP) message, and send the SDP message to the surveillence platform;
the surveillence platform is further configured to: acquire the field supporting FEC from the SDP message, perform initialization on the acquired field and reserve resources related to the acquired field.

9. The video surveillence system according to claim 8, wherein,
the SDP message is: m=<media> <port> <transport> <fmt list>, wherein <fmt list> is the field supporting FEC, key fields of <fmt list> include: load type, source code stream identity, FEC encoding identity, FEC encoding redundancy rate, a number of source packets of FEC encoding and FEC repair window size;
the surveillence platform is configured to split the received code streams transferred by the surveillence front end into the source media code stream and the FEC code stream according to the load type.

10. The video surveillence system according to claim 7, wherein,
the surveillence front end is further configured to: when performing FEC encoding on the source media code stream, add an FEC header before FEC encoding data, and subsequently, take the FEC header and the FEC encoding data together as load contents of a Real-time Transport Protocol (RTP) packet to be packaged directly; and when performing RTP encapsulation on the FEC encoding data, adopt the load type different from the source media code stream to define the FEC encoding data.

11. The video surveillence system according to claim 7, wherein,
the surveillence platform is configured to recover the lost media packet in the source media code stream in the following way:
recovering the lost media packet in the source media code stream through the FEC code stream and an FEC decoding operation.

12. The video surveillence system according to claim 8, wherein,
the surveillence platform is further configured to: when surveillence is stopped, send a stop play request to the surveillence front end, and release the reserved resources after receiving a stop play response sent by the surveillence front end;
the surveillence front end is further configured to: reply the stop play response to the surveillence platform when receiving the stop play request sent by the surveillence platform, and stop sending the source media code stream and FEC code stream.
